(19) Europäisches Patentamt
European Patent Office
Office européen des brevets

(11) **EP 3 796 544 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **20194484.0**

(22) Anmeldetag: **04.09.2020**

(51) Internationale Patentklassifikation (IPC):
*H02P 6/08* (2016.01)     *H02P 23/00* (2016.01)
*H02P 6/18* (2016.01)     *H02P 23/14* (2006.01)
*H02P 23/12* (2006.01)

(52) Gemeinsame Patentklassifikation (CPC):
**H02P 6/08; H02P 6/187; H02P 23/00; H02P 23/0077; H02P 23/12; H02P 23/14**

(54) **VERFAHREN UND VORRICHTUNG ZUM BETREIBEN EINER ELEKTRISCHEN MASCHINE**

METHOD AND DEVICE FOR OPERATING AN ELECTRIC MACHINE

PROCÉDÉ ET DISPOSITIF DE FONCTIONNEMENT UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2019 DE 102019214191**

(43) Veröffentlichungstag der Anmeldung:
**24.03.2021 Patentblatt 2021/12**

(73) Patentinhaber: **Robert Bosch GmbH
70442 Stuttgart (DE)**

(72) Erfinder: **Vandamme, Antoine
70839 Gerlingen (DE)**

(56) Entgegenhaltungen:
**DE-A1-102004 055 042**

• **Qingfang Teng ET AL: "Current Sensorless Model Predictive Torque Control Based on Adaptive Backstepping Observer for PMSM Drives", , 1. Januar 2014 (2014-01-01), Seiten 187-202, XP055763611, DOI: E-ISSN: 2224-2678 Gefunden im Internet: URL:https://opus.lib.uts.edu.au/bitstream/ 10453/34592/1/a145702-328.pdf [gefunden am 2021-01-11]**

**EP 3 796 544 B1**

**Beschreibung**

Technisches Gebiet

Die Erfindung betrifft allgemein elektrische Maschinen, insbesondere Verfahren zum Betreiben elektrischer Maschinen, die ein Maschinenmodell zur Modellierung einer Betriebsgröße der elektrischen Maschine verwenden.

Technischer Hintergrund

Sowohl zur Simulation als auch zum Betrieb elektrischer Maschinen wird ein Maschinenmodell verwendet, das eine Beziehung zwischen Phasenspannungen und Phasenströmen der elektrischen Maschine abbildet. Kern dieses Maschinenmodells ist eine Induktivitätsmatrix, deren Elemente läuferlageabhängige Stranginduktivitäten und Kopplungsinduktivitäten aufweisen. Zur Verwendung dieses Maschinenmodells ist üblicherweise eine Invertierung der Induktivitätsmatrix notwendig, was aufgrund der Lageabhängigkeit der einzelnen Elemente der Induktivitätsmatrix komplex und nicht trivial ist.

Bisherige Ansätze zur Implementierung des Maschinenmodells nutzen eine Park-Transformation in ein läuferfestes Koordinatensystem, die in der Regel verlustbehaftet ist. Andere Ansätze vereinfachen das Maschinenmodell durch die Annahme, dass die Kopplungsinduktivitäten lageunabhängig sind. Dieser Ansatz ist aber bei Folgepolmaschinen, bei den die Induktivitäten nicht nur Harmonien 2. Ordnung haben, sondern auch Harmonien 1., 3., 4. und höherer Ordnung aufweisen, nicht zielführend, da die herkömmlichen Invertierungsverfahren für die Induktivitätsmatrix nur Harmonien 2. Ordnung berücksichtigen kann und die Harmonien anderer Ordnungen nicht berücksichtigt werden.

Weiterhin ermöglicht eine Sternschaltung der Phasenstränge der elektrischen Maschine eine Reduzierung der Induktivitätsmatrix auf eine 2x2-Matrix, deren Elemente von einzelnen Elementen der Induktivitätsmatrix abhängen. Dies macht eine Invertierung zwar möglich, ist jedoch mit einem erheblichen Rechenaufwand verbunden.

Die Druckschrift QINGFANG TENGI et al., "Current Sensorless Model Predictive Torque Control Based on Adaptive Backstepping Observer for PMSM Drives", Department of Automation and Electrical Engineering, Lanzhou Jiaotong University, Lanzhou, Gansu, 730070 P.R.CHINA offenbart ein Verfahren zum geregelten Betreiben einer mehrphasigen elektrischen Maschine mit mehreren in Sternschaltung verschalteten Phasensträngen abhängig von einer Regelabweichung einer Regelung. Es wird der Betrieb der elektrischen Maschine abhängig von rechnerisch ermittelten Ist-Phasenströmen geregelt, um Klemmenpotenzialangaben für die Ansteuerung eines Wechselrichters bereitzustellen, der entsprechend Klemmenpotenzialean die elektrische Maschine anlegt, wobei die Ist-Phasenströmemithilfe eines Maschinenmodells abhängig von den Klemmenpotenzialen und der Regelabweichung ermittelt werden.

Die Druckschrift DE 10 2004 055 042 A1 offenbart eine Steuer-/Regelvorrichtung für einen bürstenlosen Motor, welcher einen Permanentmagnetrotor und einen Stator umfasst, welche eine Oberwellenspannung an eine Wicklung des Stators anlegt und die Position des Rotors aus dem durch die Hochfrequenzspannung erzeugten elektrischen Motorstrom misst, umfassend: eine Anweisungs-Steuer-/Regeleinrichtung für elektrischen Strom, welche in einer die Orientierung eines Magnetpols des Rotors unterscheidenden Magnetpol-Unterscheidungsprozedur einen Anweisungswert für elektrischen Feldstrom auf Grundlage der Position des Rotors variiert.

Es ist eine Aufgabe der vorliegenden Erfindung, ein Verfahren zum Betreiben einer elektrischen Maschine mit einem Maschinenmodell zur Verfügung zu stellen, das einen geringen Rechenaufwand benötigt.

Offenbarung der Erfindung

Diese Aufgabe wird durch das Verfahren zum geregelten Betreiben einer mehrphasigen elektrischen Maschine mit mehreren in Sternschaltung verschalteten Phasensträngen gemäß Anspruch 1 sowie durch die Vorrichtung und das Motorsystem gemäß den nebengeordneten Ansprüchen gelöst.

Weitere Ausgestaltungen sind in den abhängigen Ansprüchen angegeben.

Gemäß einem ersten Aspekt ist ein Verfahren zum Betreiben einer mehrphasigen elektrischen Maschine mit mehreren in Sternschaltung verschalteten Phasensträngen vorgesehen, mit folgenden Schritten:

- Bereitstellen einer Regelabweichung,
- Regeln des Betriebs der elektrischen Maschine abhängig von rechnerisch ermittelten Ist-Phasenströmen, um Klemmenpotenzialangaben für die Ansteuerung eines Wechselrichters bereitzustellen, der entsprechend Klemmenpotenziale an die elektrische Maschine anlegt, wobei die Ist-Phasenströme mithilfe eines Maschinenmodells abhängig von den Klemmenpotenzialen und der Regelabweichung ermittelt werden, wobei das Maschinenmodell von einer Induktivitätsmatrix abhängt, die magnetische Eigenschaften der elektrischen Maschine so bestimmt, dass durch diese Spannungsdifferenzen zwischen den Klemmenpotenzialen auf die Ist-Phasenströme abgebildet werden.

Zur Simulation und den Betrieb von elektrischen Maschinen werden in der Regel Maschinenmodelle verwendet, die die Beziehung zwischen Phasenspannungen und Phasenströmen sowie die Abhängigkeit des Drehmoments von den Phasenströmen bzw. vom Motorstrom beschreiben. Für eine dreiphasige elektrische Maschine ergibt sich beispielsweise für das Maschinenmodell

$$\begin{bmatrix} Va - Vwye \\ Vb - Vwye \\ Vc - Vwye \end{bmatrix} = R \cdot \begin{bmatrix} Ia \\ Ib \\ Ic \end{bmatrix} + \frac{d}{dt}\left( \begin{bmatrix} La(\varphi) & Mab(\varphi) & Mac(\varphi) \\ Mab(\varphi) & Lb(\varphi) & Mbc(\varphi) \\ Mac(\varphi) & Mbc(\varphi) & Lc(\varphi) \end{bmatrix} \cdot \begin{bmatrix} Ia \\ Ib \\ Ic \end{bmatrix} \right) + \begin{bmatrix} ea \\ eb \\ ec \end{bmatrix}$$

wobei Va, Vb, Vc den Klemmenpotenzialen der Phasenstränge, Vwye dem Sternpunktpotenzial, Ia,Ib,Ic den Phasenströmen, R dem elektrischen Phasenwiderstand, La, Lb, Lc den Stranginduktivitäten, Mab, Mac, Mbc den Kopplungsinduktivitäten zwischen jeweils zwei der Phasenstränge, $\varphi$ der Läuferlage und ea,eb,ec der durch die Rotation des Läufers jeweils induzierten Spannung entsprechen. Die Indices a,b,c bezeichnen den jeweiligen Phasenstrang.

Die Phasenspannungen über den Phasensträngen (Differenz aus Klemmenpotenzial und Sternpunktpotenzial) werden als ein Summenterm dargestellt, der von dem Strangwiderstand, den Stranginduktivitäten und den durch die Rotation des Läufers bewirkten induzierten Spannungen abhängt. Aufgrund der Wechselwirkungen der Induktivitäten zwischen den Strangspulen werden die Magnetisierungsspannungen mithilfe einer Induktivitätsmatrix beschrieben, die sowohl Stranginduktivitäten als auch Kopplungsinduktivitäten beinhaltet. In der Realität ergeben sich für die Stranginduktivitäten und die Kopplungsinduktivitäten lageabhängige Funktionen, die sich als Reihenentwicklungen von Cosinus-Termen darstellen lassen.

Da das Sternpotential $V_{wye}$ nicht einfach zu berechnen ist, bildet man eher die Differenz aus den 1. und 2. Bzw. 2. und 3. Stromgleichungen, um $V_{wye}$ zu eliminieren. Dazu eliminiert man auch Ic unter Verwendung der Sterneigenschaft: Ia+Ib+Ic = 0 <-> Ic = -Ia-Ib zu:

$$\begin{bmatrix} Va - Vb \\ Vb - Vc \end{bmatrix} = R \cdot \begin{bmatrix} Ia - Ib \\ Ia + 2Ib \end{bmatrix} +$$

$$\frac{d}{dt}\left( \underbrace{\begin{bmatrix} La(\varphi) + Mbc(\varphi) - Mab(\varphi) - Mac(\varphi) & -Lb(\varphi) - Mac(\varphi) + Mbc(\varphi) + Mab(\varphi) \\ Lc(\varphi) + Mab(\varphi) - Mac(\varphi) - Mbc(\varphi); & Lc(\varphi) + Lb(\varphi) - 2.Mbc(\varphi) \end{bmatrix}}_{Reduzierte\ induktivitätsmatrix\ LM_{2x2}(\varphi)} \cdot \right.$$

$$\left. \begin{bmatrix} Ia \\ Ib \end{bmatrix} \right) + \begin{bmatrix} ea - eb \\ eb - ec \end{bmatrix}$$

Bei dieser umgeschriebenen Stromgleichung enthält die $LM_{2\times2}(\varphi)$ Matrix vier Koeffizienten, deren Berechnung viele Rechenoperationen erfordern (die einzelnen Terme La, Mab, ... sind als Summe von cosinus-Termen definiert, so dass diese oft eine Winkelverzögerung von +-2pi/3 enthalten, so dass keine Vereinfachung bzw. keine Gruppierung der Koeffizienten möglich ist).

Die für herkömmlichen Regelungen von elektrischen Maschinen übliche Berechnung der invertierten Matrix $LM^{-1}_{2\times2}(\varphi)$ erfordert ebenfalls einen hohen Rechenaufwand:

$$LM_{2x2}^{-1}(\varphi) =$$

$$\frac{1}{Det_{LM}} \cdot \begin{bmatrix} Lc(\varphi) + Lb(\varphi) - 2.Mbc(\varphi); & Lb(\varphi) + Mac(\varphi) - Mbc(\varphi) - Mab(\varphi) \\ -Lc(\varphi) - Mab(\varphi) + Mac(\varphi) + Mbc(\varphi) & La(\varphi) + Mbc(\varphi) - Mab(\varphi) - Mac(\varphi) \end{bmatrix}$$

mit

$$Det_{LM} =$$

$$La(\varphi) \cdot Lb(\varphi) + La(\varphi) \cdot Lc(\varphi) + Lb(\varphi) \cdot Lc(\varphi)$$

$$-Mab(\varphi)^2 - Mbc(\varphi)^2 - Mac(\varphi)^2$$

$$-2 \cdot [La(\varphi) \cdot Mbc(\varphi) + Lb(\varphi) \cdot Mac(\varphi) + Lc(\varphi) \cdot Mab(\varphi)]$$

$$+\text{Mbc}(\varphi) \cdot Mac(\varphi) + Mab(\varphi) \cdot Mbc(\varphi) + \text{Mac}(\varphi) \cdot Mac(\varphi)$$

Die Berechnung der Koeffizienten der Matrixinverse LM$^{-1}_{2\times2}$(φ) ist insbesondere rechenaufwändig, weil sie die Berechnung der einzelnen Koeffizienten La(φ), Lb(φ), Lc(cp), Mab((φ), Mbc(φ) und Mac(φ) erfordert (6 Summen von cosine Termen).

Die entsprechenden Terme für eine mehr als dreiphasige Maschine weisen eine entsprechend höhere Komplexität auf. Da zum Betreiben der elektrischen Maschine eine Kenntnis über die modellierten jeweils aktuellen Phasenströme notwendig ist, ist bei Systemen ohne Strommessung eine Invertierung der Induktivitätsmatrix erforderlich. Ab einer dreiphasigen elektrischen Maschine ist die oben erwähnte herkömmliche Induktivitätsmatrix jedoch nur ungenau bzw. durch Annahme von Vereinfachungen zu invertieren. Insbesondere werden bei den herkömmlichen Verfahren zur Invertierung der Induktivitätsmatrix Harmonien anderer Ordnung nicht berücksichtigt.

Es wird daher vorgeschlagen, für die Steuerung oder Regelung der elektrischen Maschine ein modifiziertes Maschinenmodell zu verwenden, das eine modifizierte Induktivitätsmatrix verwendet. Die modifizierte Induktivitätsmatrix beinhaltet drei Induktivitätsterme, die sich durch Umformung der Induktivitätsmatrix ergeben. Die Induktivitätsterme fassen dabei die Stranginduktivitäten und die Kopplungsinduktivitäten zusammen und berücksichtigen alle Terme der Strang- und Kopplungsinduktivitäten.

$$dLM_{2x2}(\varphi) = \begin{bmatrix} dLMa(\varphi) & -dLMb(\varphi) \\ dLMc(\varphi) & dLMb(\varphi) + dLMc(\varphi) \end{bmatrix}$$

wobei sich unter Verwendung der Gleichung

$$\cos(\varphi) + \cos(\varphi + 2\,\varphi\,/3) + \cos(\varphi - 2^*\,\varphi\,/3) = 0$$

eine Einzelsumme von cosine Termen ergibt:

$$dLM_a(\varphi) = La(\varphi) + Mbc(\varphi) - Mab(\varphi) - Mac(\varphi)$$

$$= (l_0 + m_0) + (l_1 + m_1) \cdot cos(\varphi) + (l_2 + m_2) \cdot cos(2 \cdot \varphi)$$

$$+ (l_3 + m_3) \cdot cos(3 \cdot \varphi) + \cdots - \big(Mab(\varphi) + Mac(\varphi)\big)$$

bzw.

$$dLM_a(\varphi) = (l_0 - m_0) + (l_1 + 2 \cdot m_1) \cdot cos(\varphi) + (l_2 + 2 \cdot m_2) \cdot cos(2 \cdot \varphi)$$

$$+ (l_3 - m_3) \cdot cos(3 \cdot \varphi) + \cdots$$

$$-dLM_b(\varphi) = -Lb(\varphi) - Mac(\varphi) + Mbc(\varphi) + Mab(\varphi)$$

$$= -(l_0 + m_0) - (l_1 + m_1) \cdot cos\left(\varphi - \frac{2\pi}{3}\right) - (l_2 + m_2)$$

$$\cdot cos\left[2 \cdot \left(\varphi - \frac{2\pi}{3}\right)\right] - (l_3 + m_3) \cdot cos\left[3 \cdot \left(\varphi - \frac{2\pi}{3}\right)\right] - \cdots$$

$$+ \big(Mbc(\varphi) + Mab(\varphi)\big)$$

bzw.

$$-dLM_b(\varphi) = -(l_0 - m_0) - (l_1 + 2 \cdot m_1) \cdot cos\left(\varphi - \frac{2\pi}{3}\right) - (l_2 + 2 \cdot m_2)$$

$$\cdot cos\left[2 \cdot \left(\varphi - \frac{2\pi}{3}\right)\right] - (l_3 - m_3) \cdot cos\left[3 \cdot \left(\varphi - \frac{2\pi}{3}\right)\right] - \cdots$$

$$dLM_c(\varphi) = Lc(\varphi) + Mab(\varphi) - Mac(\varphi) - Mbc(\varphi)$$

$$= l_0 + m_0 + (l_1 + m_1) \cdot cos\left(\varphi + \frac{2\pi}{3}\right)$$

$$+(l_2 + m_2) \cdot cos\left[2 \cdot \left(\varphi + \frac{2\pi}{3}\right)\right]$$

$$+(l_3 + m_3) \cdot cos\left[3 \cdot \left(\varphi + \frac{2\pi}{3}\right)\right] + \cdots$$

$$-\left(Mac(\varphi) + Mbc(\varphi)\right)$$

bzw.

$$dLM_c(\varphi) = l_0 - m_0 + (l_1 + 2 \cdot m_1) \cdot cos\left(\varphi + \frac{2\pi}{3}\right) + (l_2 + 2 \cdot m_2)$$

$$\cdot cos\left[2 \cdot \left(\varphi + \frac{2\pi}{3}\right)\right] + (l_3 - m_3) \cdot cos\left[3 \cdot \left(\varphi + \frac{2\pi}{3}\right)\right] + \cdots$$

Die Implementierung eines Maschinenmodells mit der oben beschriebenen relativen Induktivitätsmatrix hat somit den Vorteil, dass das Verhalten der elektrischen Maschine genauer modelliert werden kann, da die Umrechnung und insbesondere die Invertierung (da die Matrix die Dimension 2x2 aufweist) verlustfrei erfolgen kann. Dies kommt insbesondere Regelungsverfahren mit Beobachtern zugute, in denen eine invertierte Induktivitätsmatrix benötigt wird, um die Strangströme aus den Phasenspannungen zu modellieren.

Mit den umgeschriebenen Koeffizienten lässt sich der Determinant der Matrix $LM_{2\times 2}(\varphi)$ mit wenigen Rechenoperationen berechnen, sodass der Ausdruck der inversen Induktivitätsmatrix kompakter wird:

$$LM_{2x2}^{-1}(\varphi) = \frac{1}{dLMa(\varphi) \cdot dLMb(\varphi) + dLMb(\varphi) \cdot dLMc(\varphi) + dLMc(\varphi) \cdot dLMa(\varphi)}$$

$$\cdot \begin{bmatrix} dLMb(\varphi) + dLMc(\varphi) & dLMb(\varphi) \\ -dLMc(\varphi) & dLMa(\varphi) \end{bmatrix}$$

In der $dLM_{2\times 2}(\varphi)$ Matrix, sind die Terme $dLM_a(\varphi)$, $dLM_b(\varphi)$ und $dLM_c(\varphi)$ nur Summen von cosinus Termen und haben eine einfache Darstellung. Die Berechnung der invertierten Induktivitätsmatrix $LM^{-1}{}_{2\times 2}(\varphi)$ erfordert in der modifizierten Form wesentlich weniger mathematische Operationen.

Weiterhin kann die Induktivitätsmatrix Elemente aus Induktivitäten aufweisen, die aus Stranginduktivitäten und Kopplungsinduktivitäten gebildet sind, die jeweils lageabhängig sind, und wobei die Induktivitäten durch Koeffizienten l,m von Harmonischen einer Rotation des elektrischen Lagewinkels definiert sind.

Insbesondere können die Elemente der Induktivitätsmatrix alle oder zumindest die ersten fünf Harmonischen der Stranginduktivitäten und Kopplungsinduktivitäten zwischen den Phasensträngen berücksichtigen.

Gemäß weiterer Ausführungsformen kann die Regelung eine Drehzahlregelung , eine Momentenregelung oder eine Flussregelung umfassen.

Es kann vorgesehen sein, dass die Soll-Phasenspannungen als pulsweitenmodulierte Signale zum Ansteuern eines Wechselrichters vorgegeben werden, wobei die Klemmenpotenziale gemessen werden, um mithilfe des Maschinenmodells die Ist-Phasenströme zu ermitteln.

Weiterhin können die Ist-Phasenströme verwendet werden, um ein Ist-Motormoment und/oder Ist-Motorflüsse zu ermitteln.

Insbesondere kann das Ist-Motormoment und/oder Ist-Motorflüsse für eine Momentenregelung bzw. eine Flussregelung verwendet werden.

Kurzbeschreibung der Zeichnungen

Ausführungsformen werden nachfolgend anhand der beigefügten Zeichnungen näher erläutert. Es zeigen:

Figur 1 eine schematische Darstellung eines Schaltbilds einer dreiphasigen elektrischen Maschine mit einer Drehzahlregelung; und

Figur 2 ein Flussdiagramm zur Beschreibung des Verfahrens zum Betreiben des Motorsystems.

Beschreibung von Ausführungsformen

Das Verfahren zum Betreiben einer elektrischen Maschine wird nachfolgend an einem Beispiel eines Motorsystems 1 mit einem dreiphasigen Synchronmotor und einer Drehzahlregelung näher beschrieben.

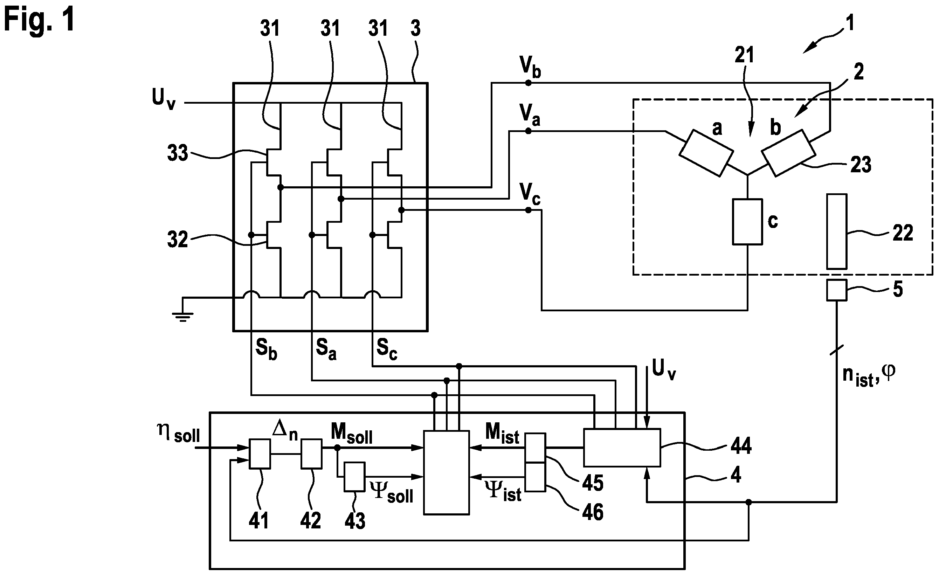

Das Motorsystem 1 der Figur 1 weist als eine elektrische Maschine eine Synchronmaschine 2 mit einem Stator 21 und einem Läufer 22 auf. Der Stator 21 weist drei in Sternschaltung verschaltete Phasenstränge 23 auf.

Jeder der Phasenstränge 23 wird über eine eigene Inverterschaltung 31 eines Wechselrichters 3 (Leistungstreiber) angesteuert. Der Wechselrichter 3 kann beispielsweise als B6-Wechselrichter ausgebildet sein und jede Inverterschaltung 31 einen Pull-up- 33 und einen Pull-down-Transistor 32 aufweisen. Der Wechselrichter 3 dient dazu, gezielt Klemmenpotenziale Va, Vb, Vc zum Anlegen an die Phasenstränge 23 gemäß einem Kommutierungsverfahren, wie z.B. einer Blockkommutierung oder einer Sinuskommutierung, anzulegen.

Das Kommutierungsverfahren kann die Ansteuerung der Phasenstränge 23 mithilfe einer Pulsweitenmodulation mit einem jeweiligen Tastverhältnis vorsehen. Die Ansteuersignale Sa, Sb, Sc entsprechen den Klemmenpotenzialangaben und sind pulsweitenmodulierte Signale, mit denen der Wechselrichter 3 angesteuert wird.

Die Ansteuersignale Sa, Sb, Sc werden von einer Steuereinheit 4 bereitgestellt, die den Wechselrichter 3 ansteuert.

Weiterhin kann der Läufer 22 des Synchronmotors 2 mit einem Lagesensor 5 gekoppelt sein, um eine Läuferlage $\varphi$ (elektrische Läuferlage) und durch zeitliche Ableitung eine Istdrehzahl $n_{ist}$ bereitzustellen.

Die Steuereinheit 4 kann beispielsweise eine Drehzahlregelung ausführen. Der Drehzahlregelungseinheit 4 wird als Stellgröße eine Solldrehzahl $n_{soll}$ vorgegeben.

Die Drehzahlregelung in der Steuereinheit 4 verwendet abgeschätzte Ist-Phasenströme $I_{aist}$, $I_{bist}$, $I_{cist}$ und die Regelabweichung $\Delta n$ zwischen $n_{soll}$ und $n_{ist}$ gemäß einer Regelungsfunktion.

Die Steuereinheit 4 umfasst ein Differenzglied 41, um die Regelabweichung $\Delta n$ zu bestimmen. Weiterhin sind eine Soll-Drehmomentbestimmungseinheit 42, die beispielsweise als ein PI-Regler ausgebildet sein kann, zur Bestimmung eines Soll-Drehmoments $M_{soll}$ als Regelungsstellgröße und eine Soll-Flussbestimmungseinheit 43 zur Bestimmung eines Soll-Motorflusses in an sich bekannter Weise aus dem Soll-Drehmoment $M_{soll}$ vorgesehen. Hierzu wird auf die Druckschrift QINGFANG TENGI et al., "Current Sensorless Model Predictive Torque Control Based on Adaptive Backstepping Observer for PMSM Drives", Department of Automation and Electrical Engineering, Lanzhou Jiaotong University, Lanzhou, Gansu, 730070 P.R.CHINA verwiesen.

Die Ist-Phasenströme Iaist, Ibist, Icist werden in einem Phasenstromschätzblock 44 gemäß einem Maschinenmodell aus den aktuellen Klemmenpotenzialangaben Sa, Sb, Sc der Phasenstränge geschätzt.

Weiterhin wird ein Ist-Drehmoment Mist aus den drei geschätzten Ist-Phasenströmen $I_{aist}$, $I_{bist}$, $I_{cist}$ in einem Momentenberechnungsblock 45 geschätzt. Mithilfe eines Flussermittlungsblock 46 werden die Ist-Motorflüsse ermittelt. Hierzu wird auf die Druckschrift QINGFANG TENGI et al., "Current Sensorless Model Predictive Torque Control Based on Adaptive Backstepping Observer for PMSM Drives", Department of Automation and Electrical Engineering, Lanzhou Jiaotong University, Lanzhou, Gansu, 730070 P.R.CHINA verwiesen.

Für die Berechnung der Ist-Phasenströme $I_{aist}$, $I_{bist}$, $I_{cist}$ im Phasenstromschätzblock 44 wird das modifizierte Maschinenmodell verwendet.

Im Kontext einer modellprädiktiven Drehzahlregelung wird das modifizierte Maschinenmodell im Rahmen einer Optimierung eingesetzt, um die optimierten Werte der Klemmenpotentiale für die Ansteuerung des Wechselrichters 3 mithilfe der Klemmenpotenzialangaben Sa, Sb, Sc zu finden. Dabei wird als Kostenfunktion ein Abstand zwischen dem Soll- und dem Ist-Drehmoment bzw. den Sollmotorflüssen und den Ist-Motorflüssen minimiert.

Die Berechnung des Maschinenmodells erfolgt entsprechen u.a. Beschreibung.

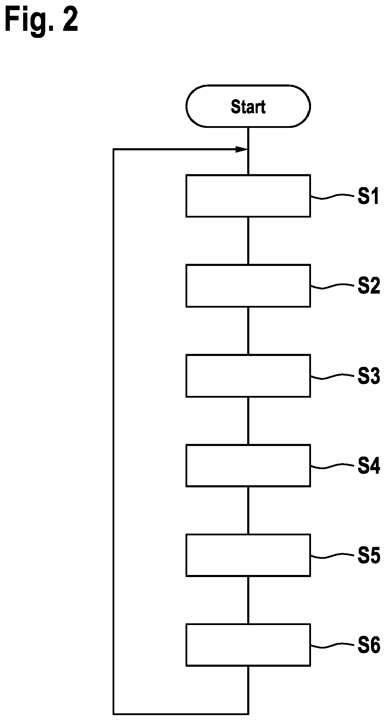

Mithilfe des Flussdiagramms der Figur 2 wird nachfolgend ein beispielhaftes Verfahren zum Betreiben des Motorsystems 1 beschrieben.

In Schritt S1 wird eine Solldrehzahl $n_{soll}$ vorgegeben. Die Solldrehzahl $n_{soll}$ kann beispielsweise eine Stellgröße einer Lage- oder Drehzahlregelung sein.

In Schritt S2 werden ein Soll-Drehmoment und/oder Soll-Motorflüsse aus der Regelabweichung zwischen der Soll-Drehzahl und der gemessenen Ist-Drehzahl ermittelt. Das Soll-Drehmoment stellt ein eine Stellgröße einer Drehzahlregelung dar.

In Schritt S3 werden basierend auf den zuletzt angelegten Klemmenpotentialangaben Sa, Sb, Sc unter Nutzung des nachfolgend beschriebenen modifizierten Maschinenmodells Ist-Phasenströme $I_{aist}$, $I_{bist}$, $I_{cist}$ abgeschätzt.

In Schritt S4 werden ein geschätztes Ist-Drehmoment und geschätzte Ist-Motorflüsse aus den Phasenströmen $I_{aist}$, $I_{bist}$, $I_{cist}$ ermittelt.

In Schritt S5 wird zur Lösung eines kontinuierlich betriebenen Optimierungsverfahrens eine Kostenfunktion minimiert, um die Klemmenpotenzialangaben zur Ansteuerung des Wechselrichters 3 zu erhalten. Die Kostenfunktion kann einen Abstand zwischen dem Soll-Drehmoment und dem Ist-Drehmoment und/oder einen Abstand zwischen den Soll-Motorflüssen und Ist-Motorflüssen bewerten.

Die sich aus dem Optimierungsverfahren ergebenden Klemmenpotenzialangaben können an den Wechselrichter 3 angelegt werden.

Bei der Optimierung werden die optimierten Werte für die Klemmenpotenziale Va, Vb, Vc gesucht, die zur Minimierung der Kostenfunktion führen. Dabei wird das modifizierte Maschinenmodell in jeder Iteration gelöst. Ist die Kostenfunktion minimal, erreicht das Drehmoment der Maschine bzw. die Motorflüsse den Wert des Soll-Drehmoments bzw. der Soll-Motorflüsse, was bedeutet, dass die Ist-Drehzahl die Soll-Drehzahl erreicht haben sollte.

Das herkömmliche Maschinenmodell lautet:

$$\begin{bmatrix} Va - Vwye \\ Vb - Vwye \\ Vc - Vwye \end{bmatrix} = R \cdot \begin{bmatrix} Iaist \\ Ibist \\ Icist \end{bmatrix} + \frac{d}{dt}\left( \underbrace{\begin{bmatrix} La(\varphi) & Mab(\varphi) & Mac(\varphi) \\ Mab(\varphi) & Lb(\varphi) & Mbc(\varphi) \\ Mac(\varphi) & Mbc(\varphi) & Lc(\varphi) \end{bmatrix}}_{Induktivit\ddot{a}tsmatrix\ L(\varphi)} \cdot \begin{bmatrix} Iaist \\ Ibist \\ Icist \end{bmatrix} \right) + \begin{bmatrix} ea \\ eb \\ ec \end{bmatrix}$$

wobei ea, eb ec den in den Phasensträngen 23 induzierten Spannungen entsprechen, die sich in bekannter Weise aus der magnetischen Feldstärke und der Drehzahl des Läufers ermitteln lassen. Ferner entspricht Vwye dem Sternpunktpotenzial, das z.B. gemessen werden kann.

Die herkömmliche Invertierung der obigen Induktivitätsmatrix ist rechenaufwändig und stellt lediglich eine Näherung dar, die lediglich Harmonische bis zur 2.Ordnung berücksichtigt. Ferner ist eine Kenntnis über das Sternpunktpotenzial Vwye notwendig.

Die einzelnen Komponenten der Induktivitätsmatrix sind üblicherweise wie folgt definiert:

$$La(\varphi) = l_0 + l_1 \cdot cos(\varphi) + l_2 \cdot cos(2 \cdot \varphi) + l_3 \cdot cos(3 \cdot \varphi) + \cdots$$

$$Lb(\varphi) = l_0 + l_1 \cdot cos\left(\varphi - \frac{2\pi}{3}\right) + l_2 \cdot cos\left[2 \cdot \left(\varphi - \frac{2\pi}{3}\right)\right] + l_3 \cdot cos\left[3 \cdot \left(\varphi - \frac{2\pi}{3}\right)\right] + \cdots$$

$$Lc(\varphi) = l_0 + l_1 \cdot cos\left(\varphi + \frac{2\pi}{3}\right) + l_2 \cdot cos\left[2 \cdot \left(\varphi + \frac{2\pi}{3}\right)\right] + l_3 \cdot cos\left[3 \cdot \left(\varphi + \frac{2\pi}{3}\right)\right] + \cdots$$

$$Mbc(\varphi) = m_0 + m_1 \cdot cos(\varphi) + m_2 \cdot cos(2 \cdot \varphi) + m_3 \cdot cos(3 \cdot \varphi) + \cdots$$

$$Mac(\varphi) = m_0 + m_1 \cdot cos\left(\varphi - \frac{2\pi}{3}\right) + m_2 \cdot cos\left[2 \cdot \left(\varphi - \frac{2\pi}{3}\right)\right] + m_3$$

$$\cdot cos\left[3 \cdot \left(\varphi - \frac{2\pi}{3}\right)\right] + \cdots$$

$$Mab(\varphi) = m_0 + m_1 \cdot cos\left(\varphi + \frac{2\pi}{3}\right) + m_2 \cdot cos\left[2 \cdot \left(\varphi + \frac{2\pi}{3}\right)\right] + m_3 \cdot cos\left[3 \cdot \left(\varphi + \frac{2\pi}{3}\right)\right] + \cdots$$

wobei die Komponenten $l_0$, $l_1$, $l_2$, $l_3$....$l_n$ und $m_0$, $m_1$, $m_2$ , $m_3$...$m_n$ den Amplituden der Harmonischen 0. bis n-ter Ordnung entsprechen.

Durch Verwenden einer modifizierten Induktivitätsmatrix

$$dLM_{2x2}(\varphi) = \begin{bmatrix} dLMa(\varphi) & -dLMb(\varphi) \\ dLMc(\varphi) & dLMb(\varphi) + dLMc(\varphi) \end{bmatrix}$$

können alle bestimmten Komponenten auch in der reduzierten Induktivitätsmatrix berücksichtigt werden, mit

$$dLM_a(\varphi) = La(\varphi) + Mbc(\varphi) - Mab(\varphi) - Mac(\varphi)$$
$$= (l_0 + m_0) + (l_1 + m_1) \cdot cos(\varphi) + (l_2 + m_2) \cdot cos(2 \cdot \varphi)$$
$$+ (l_3 + m_3) \cdot cos(3 \cdot \varphi) + \cdots - \left(Mab(\varphi) + Mac(\varphi)\right)$$

Bzw.

$$dLM_a(\varphi) = (l_0 - m_0) + (l_1 + 2 \cdot m_1) \cdot cos(\varphi) + (l_2 + 2 \cdot m_2) \cdot cos(2 \cdot \varphi)$$
$$+ (l_3 - m_3) \cdot cos(3 \cdot \varphi) + \cdots$$

Weiterhin gilt

$$-dLM_b(\varphi) = -Lb(\varphi) - Mac(\varphi) + Mbc(\varphi) + Mab(\varphi)$$
$$= -(l_0 + m_0) - (l_1 + m_1) \cdot cos\left(\varphi - \frac{2\pi}{3}\right) - (l_2 + m_2)$$
$$\cdot cos\left[2 \cdot \left(\varphi - \frac{2\pi}{3}\right)\right] - (l_3 + m_3) \cdot cos\left[3 \cdot \left(\varphi - \frac{2\pi}{3}\right)\right] - \cdots$$
$$+ \left(Mbc(\varphi) + Mab(\varphi)\right)$$

bzw.

$$-dLM_b(\varphi) = -(l_0 - m_0) - (l_1 + 2 \cdot m_1) \cdot cos\left(\varphi - \frac{2\pi}{3}\right) - (l_2 + 2 \cdot m_2)$$
$$\cdot cos\left[2 \cdot \left(\varphi - \frac{2\pi}{3}\right)\right] - (l_3 - m_3) \cdot cos\left[3 \cdot \left(\varphi - \frac{2\pi}{3}\right)\right] - \cdots$$

Und weiterhin entsprechend

$$dLM_c(\varphi) = Lc(\varphi) + Mab(\varphi) - Mac(\varphi) - Mbc(\varphi)$$

$$= l_0 + m_0 + (l_1 + m_1) \cdot cos\left(\varphi + \frac{2\pi}{3}\right) + (l_2 + m_2)$$

$$\cdot cos\left[2 \cdot \left(\varphi + \frac{2\pi}{3}\right)\right]$$

$$+(l_3 + m_3) \cdot cos\left[3 \cdot \left(\varphi + \frac{2\pi}{3}\right)\right] + \cdots - \left(Mac(\varphi) + Mbc(\varphi)\right)$$

bzw.

$$dLM_c(\varphi) = l_0 - m_0 + (l_1 + 2 \cdot m_1) \cdot cos\left(\varphi + \frac{2\pi}{3}\right) + (l_2 + 2 \cdot m_2)$$

$$\cdot cos\left[2 \cdot \left(\varphi + \frac{2\pi}{3}\right)\right] + (l_3 - m_3) \cdot cos\left[3 \cdot \left(\varphi + \frac{2\pi}{3}\right)\right] + \cdots$$

Dadurch kann die obige Induktivitätsmatrix in ein 2x2 Format gebracht werden, so dass sie in einfacher Weise invertiert werden kann, nämlich wie folgt:

$$LM_{2x2}^{-1}(\varphi) = \frac{1}{dLMa(\varphi) \cdot dLMb(\varphi) + dLMb(\varphi) \cdot dLMc(\varphi) + dLMc(\varphi) \cdot dLMa(\varphi)}$$

$$\cdot \begin{bmatrix} dLMb(\varphi) + dLMc(\varphi) & dLMb(\varphi) \\ -dLMc(\varphi) & dLMa(\varphi) \end{bmatrix}$$

Dadurch kann die Berechnung der Ist-Phasenströme vereinfacht vorgenommen werden, wie folgt.

$$\frac{d}{dt}\left(\begin{bmatrix} Iaist \\ Ibist \end{bmatrix}\right) = \frac{1}{dLMa(\varphi) \cdot dLMb(\varphi) + dLMb(\varphi) \cdot dLMc(\varphi) + dLMc(\varphi) \cdot dLMa(\varphi)} \cdot$$

$$\begin{bmatrix} dLMb(\varphi) + dLMc(\varphi); & dLMb(\varphi) \\ -dLMc(\varphi); & dLMa(\varphi) \end{bmatrix} \cdot \left(\begin{bmatrix} Va - Vb \\ Vb - Vc \end{bmatrix} - R \cdot \begin{bmatrix} Iaist - Ibist \\ Iaist + 2\,Ibist \end{bmatrix} - \begin{bmatrix} ea - eb \\ eb - ec \end{bmatrix}\right)$$

Mithilfe der Gleichung $I_{aist} + I_{bist} + I_{cist} = 0$ kann der fehlende Ist-Phasenstrom $I_{cist}$ berechnet werden.

Zur Lösung der obigen Gleichung werden die induzierten Spannungen ea, eb, ec mit Hilfe der gemessenen Rotorlage geschätzt, der Widerstand R geschätzt oder gemessen und die Klemmenpotentiale Va, Vb, Vc als Ergebnis einer Optimierung geschätzt. Insbesondere können als die Klemmenpotenziale Va, Vb, Vc Potenziale angenommen werden, die sich aus den Klemmenpotenzialangaben und der für den Betrieb der elektrischen Maschine 2 verwendeten Versorgungsspannung Uv ergeben.

Die resultierende Drehmomentgleichung unter Verwendung der Induktivitätsangaben zur Ermittlung des Ist-Drehmoments $M_{ist}$ aus den geschätzten Ist-Phasenströmen $I_{aist}$, $I_{bist}$, $I_{cist}$ ergibt sich dann zu:

$$M_{ist} = \frac{ea \cdot I_{aist} + eb \cdot I_{bist} + ec \cdot I_{cist}}{w} + \frac{1}{2}$$

$$\cdot \left(\frac{ddLMa(\varphi)}{d\varphi} \cdot I_{aist}^2 + \frac{ddLMb(\varphi)}{d\varphi} \cdot I_{bist}^2 + \frac{ddLMc(\varphi)}{d\varphi} \cdot I_{cist}^2\right)$$

Damit kann das Drehmoment bei entsprechender Vorgabe des Soll-Drehmoments $M_{soll}$ entsprechend einer Momentenregelung geregelt werden.

**Patentansprüche**

1. Verfahren zum geregelten Betreiben einer mehrphasigen elektrischen Maschine (2) mit mehreren in Sternschaltung verschalteten Phasensträngen (23), mit folgenden Schritten:

   - Bereitstellen einer Regelabweichung einer Regelung, wobei die Regelung eine Drehzahlregelung, eine Momentenregelung oder eine Flussregelung umfasst,
   - Regeln des Betriebs der elektrischen Maschine (2) abhängig von rechnerisch ermittelten Ist-Phasenströmen, um Klemmenpotenzialangaben (Sa, Sb, Sc) für die Ansteuerung eines Wechselrichters (3) bereitzustellen, der entsprechend Klemmenpotenziale (Va, Vb, Vc) an die elektrische Maschine (2) anlegt,
   wobei die Ist-Phasenströme ($I_{aist}$, $I_{bist}$, $I_{cist}$) mithilfe eines Maschinenmodells abhängig von den Klemmenpotenzialen (Va, Vb, Vc) und der Regelabweichung ermittelt werden,
   **dadurch gekennzeichnet, dass** das Maschinenmodell von einer Induktivitätsmatrix abhängt, die magnetische Eigenschaften der elektrischen Maschine (2) so bestimmt, dass durch diese Spannungsdifferenzen zwischen den Klemmenpotenzialen (Va, Vb, Vc) auf die Ist-Phasenströme ($I_{aist}$, $I_{bist}$, $I_{cist}$) abgebildet werden,
   wobei die Induktivitätsmatrix Terme aus Induktivitäten aufweist, die aus Stranginduktivitäten und Kopplungsinduktivitäten gebildet sind, die jeweils läuferlageabhängig sind, und wobei die Induktivitäten durch Koeffizienten von Harmonischen einer Rotation des elektrischen Lagewinkels definiert sind,
   wobei die Berechnung der Ist-Phasenströme vorgenommen wird:

   $$\frac{d}{dt}\left(\begin{bmatrix} Iaist \\ Ibist \end{bmatrix}\right) = \frac{1}{dLMa(\varphi)\cdot dLMb(\varphi)+dLMb(\varphi)\cdot dLMc(\varphi)+dLMc(\varphi)\cdot dLMa(\varphi)} \cdot$$

   $$\begin{bmatrix} dLMb(\varphi)+dLMc(\varphi); & dLMb(\varphi) \\ -dLMc(\varphi); & dLMa(\varphi) \end{bmatrix} \cdot \left(\begin{bmatrix} Va-Vb \\ Vb-Vc \end{bmatrix} - R \cdot \begin{bmatrix} Iaist-Ibist \\ Iaist+2\,Ibist \end{bmatrix} - \right.$$

   $$\left. \begin{bmatrix} ea-eb \\ eb-ec \end{bmatrix}\right)$$

   wobei

   $$dLM_a(\varphi) = La(\varphi) + Mbc(\varphi) - Mab(\varphi) - Mac(\varphi)$$

   $$-dLM_b(\varphi) = -Lb(\varphi) - Mac(\varphi) + Mbc(\varphi) + Mab(\varphi)$$

   $$dLM_c(\varphi) = Lc(\varphi) + Mab(\varphi) - Mac(\varphi) - Mbc(\varphi)$$

   wobei ea, eb ec den in den Phasensträngen induzierten Spannungen, Va, Vb, Vc den Klemmenpotenzialen, $I_{aist}$, $I_{bist}$, $I_{cist}$ den Ist-Phasenströmen, La, Lb, Lc den Stranginduktivitäten, Mab, Mac, Mbc den Kopplungsinduktivitäten zwischen jeweils zwei der Phasenstränge, $\varphi$ der Läuferlage und R dem elektrischen Phasenwiderstand entsprechen.

2. Verfahren nach Anspruch 1, wobei die Soll-Phasenspannungen als pulsweitenmodulierte Signale zum Ansteuern des Wechselrichters (3) vorgegeben werden, wobei die Klemmenpotenziale (Va, Vb, Vc) gemessen werden, um mithilfe des Maschinenmodells die Ist-Phasenströme ($I_{aist}$, $I_{bist}$, $I_{cist}$) zu ermitteln.

3. Verfahren nach einem der Ansprüche 1 bis 2, wobei die Ist-Phasenströme ($I_{aist}$, $I_{bist}$, $I_{cist}$) verwendet werden, um ein Ist-Motormoment ($M_{ist}$) und/oder Ist-Motorflüsse zu ermitteln.

4. Verfahren nach Anspruch 3, wobei das Ist-Motormoment ($M_{ist}$) und/oder die Ist-Motorflüsse für eine Momentenregelung bzw. eine Flussregelung verwendet werden.

5. Verfahren nach Anspruch 1, wobei die Induktivitäten alle oder zumindest die ersten drei, insbesondere die ersten fünf Harmonischen der Stranginduktivitäten und Kopplungsinduktivitäten zwischen den Phasensträngen (23) berücksichtigen.

6. Verfahren nach einem der Ansprüche 1 bis 5, wobei für die Regelung Ist-Phasenströme ($I_{aist}$, $I_{bist}$, $I_{cist}$) mit Hilfe des Maschinenmodells mit invertierter Induktivitätsmatrix ermittelt werden, die in einem Optimierungsproblem zur Er-

mittlung der Klemmenpotenzialangaben (S$_a$, S$_b$, S$_c$) bestimmt werden.

7. Vorrichtung zum geregelten Betreiben einer mehrphasigen elektrischen Maschine (2) mit mehreren in Sternschaltung verschalteten Phasensträngen (23), wobei die Vorrichtung ausgebildet ist zum:

- Ermitteln einer Regelabweichung einer Regelung, wobei die Regelung eine Drehzahlregelung, eine Momentenregelung oder eine Flussregelung umfasst, und
- Regeln des Betriebs der elektrischen Maschine (2) abhängig von rechnerisch ermittelten Ist-Phasenströmen, um Klemmenpotenzialangaben (Sa, Sb, Sc) für die Ansteuerung eines Wechselrichters (3) bereitzustellen, der entsprechend Klemmenpotenziale (Va, Vb, Vc) an die elektrische Maschine (2) anlegt,
**dadurch gekennzeichnet, dass** die Ist-Phasenströme (I$_{aist}$, I$_{bist}$, I$_{cist}$) mithilfe eines Maschinenmodells abhängig von den Klemmenpotenzialen (Va, Vb, Vc) und der Regelabweichung ermittelt werden, wobei das Maschinenmodell von einer Induktivitätsmatrix abhängt, die magnetische Eigenschaften der elektrischen Maschine (2) so bestimmt, dass durch diese Spannungsdifferenzen zwischen den Klemmenpotenzialen (Va, Vb, Vc) auf die Ist-Phasenströme (I$_{aist}$, I$_{bist}$, I$_{cist}$) abgebildet werden, wobei die Induktivitätsmatrix Terme aus Induktivitäten aufweist, die aus Stranginduktivitäten und Kopplungsinduktivitäten gebildet sind, die jeweils läuferlageabhängig sind, und wobei die Induktivitäten durch Koeffizienten von Harmonischen einer Rotation des elektrischen Lagewinkels definiert sind wobei die Berechnung der Ist-Phasenströme vorgenommen wird:

$$\frac{d}{dt}\left(\begin{bmatrix} Iaist \\ Ibist \end{bmatrix}\right) = \frac{1}{dLMa(\varphi)\cdot dLMb(\varphi) + dLMb(\varphi)\cdot dLMc(\varphi) + dLMc(\varphi)\cdot dLMa(\varphi)} \cdot$$

$$\begin{bmatrix} dLMb(\varphi) + dLMc(\varphi); & dLMb(\varphi) \\ -dLMc(\varphi); & dLMa(\varphi) \end{bmatrix} \cdot \left(\begin{bmatrix} Va - Vb \\ Vb - Vc \end{bmatrix} - R \cdot \begin{bmatrix} Iaist - Ibist \\ Iaist + 2\,Ibist \end{bmatrix} - \right.$$

$$\left. \begin{bmatrix} ea - eb \\ eb - ec \end{bmatrix}\right)$$

wobei

$$dLM_a(\varphi) = La(\varphi) + Mbc(\varphi) - Mab(\varphi) - Mac(\varphi)$$

$$-dLM_b(\varphi) = -Lb(\varphi) - Mac(\varphi) + Mbc(\varphi) + Mab(\varphi)$$

$$dLM_c(\varphi) = Lc(\varphi) + Mab(\varphi) - Mac(\varphi) - Mbc(\varphi)$$

wobei ea, eb ec den in den Phasensträngen induzierten Spannungen, Va, Vb, Vc den Klemmenpotenzialen, I$_{aist}$, I$_{bist}$, I$_{cist}$ den Ist-Phasenströmen, La, Lb, Lc den Stranginduktivitäten, Mab, Mac, Mbc den Kopplungsinduktivitäten zwischen jeweils zwei der Phasenstränge, $\varphi$ der Läuferlage und R dem elektrischen Phasenwiderstand entsprechen.

8. Motorsystem (1) mit einer elektrischen Maschine (2), einem Wechselrichter (3) und der Vorrichtung nach Anspruch 7.

9. Computerprogramm, welches dazu eingerichtet ist, alle Schritte eines Verfahrens nach einem der Ansprüche 1 bis 6 auszuführen.

10. Elektronisches Speichermedium, auf welchem ein Computerprogramm nach Anspruch 9 gespeichert ist.

**Claims**

1. Method for the controlled operation of a multiphase electric machine (2) having a plurality of phase winding sections (23) interconnected in a star connection, having the following steps:

- providing a control error of a control system, wherein the control system comprises a speed control system, a torque control system or a flux control system,
- controlling the operation of the electric machine (2) on the basis of computationally ascertained actual phase currents in order to provide terminal potential data (Sa, Sb, Sc) for driving an inverter (3), which accordingly applies terminal potentials (Va, Vb, Vc) to the electric machine (2),
wherein a machine model is used to ascertain the actual phase currents ($I_{aist}$, $I_{bist}$, $I_{cist}$) on the basis of the terminal potentials (Va, Vb, Vc) and the control error, **characterized in that** the machine model is based on an inductance matrix which determines magnetic properties of the electric machine (2) in such a way that it maps voltage differences between the terminal potentials (Va, Vb, Vc) against the actual phase currents ($I_{aist}$, $I_{bist}$, $I_{cist}$), wherein the inductance matrix comprises terms from inductances formed from phase inductances and coupling inductances which are each dependent on the position of the rotor, and wherein the inductances are defined by coefficients of harmonics of a rotation of the electrical position angle,
wherein the actual phase currents are calculated as follows:

$$\frac{d}{dt}\left(\begin{bmatrix} Iaist \\ Ibist \end{bmatrix}\right) = \frac{1}{dLMa(\varphi)\cdot dLMb(\varphi)+dLMb(\varphi)\cdot dLMc(\varphi)+dLMc(\varphi)\cdot dLMa(\varphi)} \cdot$$

$$\begin{bmatrix} dLMb(\varphi)+dLMc(\varphi); & dLMb(\varphi) \\ -dLMc(\varphi); & dLMa(\varphi) \end{bmatrix} \cdot \left(\begin{bmatrix} Va-Vb \\ Vb-Vc \end{bmatrix} - R\cdot \begin{bmatrix} Iaist-Ibist \\ Iaist+2\,Ibist \end{bmatrix}\right) -$$

$$\begin{bmatrix} ea-eb \\ eb-ec \end{bmatrix}\right)$$

where

$$dLM_a(\varphi) = La(\varphi) + Mbc(\varphi) - Mab(\varphi) - Mac(\varphi)$$

$$-dLM_b(\varphi) = -Lb(\varphi) - Mac(\varphi) + Mbc(\varphi) + Mab(\varphi)$$

$$dLM_c(\varphi) = Lc(\varphi) + Mab(\varphi) - Mac(\varphi) - Mbc(\varphi)$$

where ea, eb, ec correspond to the voltages induced in the phase winding sections, Va, Vb, Vc correspond to the terminal potentials, $I_{aist}$, $I_{bist}$, $I_{cist}$ correspond to the actual phase currents, La, Lb, Lc correspond to the phase inductances, Mab, Mac, Mbc correspond to the coupling inductances between two of the phase winding sections in each case, $\varphi$ corresponds to the position of the rotor and R corresponds to the electrical phase resistance.

2. Method according to Claim 1, wherein the setpoint phase voltages are specified in the form of pulse-width-modulated signals for driving the inverter (3), wherein the terminal potentials (Va, Vb, Vc) are measured in order to use the machine model to ascertain the actual phase currents ($I_{aist}$, $I_{bist}$, $I_{cist}$)

3. Method according to either of Claims 1 and 2, wherein the actual phase currents ($I_{aist}$, $I_{bist}$, $I_{cist}$) are used in order to ascertain an actual motor torque ($M_{ist}$) and/or actual motor fluxes.

4. Method according to Claim 3, wherein the actual motor torque ($M_{ist}$) and/or the actual motor fluxes are used to control the torque and/or to control the flux, respectively.

5. Method according to Claim 1, wherein the inductances take into account all or at least the first three, in particular the first five, harmonics of the phase inductances and coupling inductances between the phase winding sections (23).

6. Method according to one of Claims 1 to 5, wherein actual phase currents ($I_{aist}$, $I_{bist}$, $I_{cist}$) are ascertained for the control system by using the machine model with an inverted inductance matrix, said actual phase currents being determined in an optimization problem for ascertaining the terminal potential data ($S_a$, $S_b$, $S_c$).

7. Device for the controlled operation of a multiphase electric machine (2) having a plurality of phase winding sections (23) interconnected in a star connection, wherein the device is designed to:

- ascertain a control error of a control system, wherein the control system comprises a speed control system, a torque control system or a flux control system, and
- control the operation of the electric machine (2) on the basis of computationally ascertained actual phase currents in order to provide terminal potential data (Sa, Sb, Sc) for driving an inverter (3), which accordingly applies terminal potentials (Va, Vb, Vc) to the electric machine (2),
**characterized in that** a machine model is used to ascertain the actual phase currents ($I_{aist}$, $I_{bist}$, $I_{cist}$) on the basis of the terminal potentials (Va, Vb, Vc) and the control error, wherein the machine model is based on an inductance matrix which determines magnetic properties of the electric machine (2) in such a way that it maps voltage differences between the terminal potentials (Va, Vb, Vc) against the actual phase currents ($I_{aist}$, $I_{bist}$, $I_{cist}$), wherein the inductance matrix comprises terms from inductances formed from phase inductances and coupling inductances which are each dependent on the position of the rotor, and wherein the inductances are defined by coefficients of harmonics of a rotation of the electrical position angle, wherein the actual phase currents are calculated as follows:

$$\frac{d}{dt}\left(\begin{bmatrix} Iaist \\ Ibist \end{bmatrix}\right) = \frac{1}{dLMa(\varphi)\cdot dLMb(\varphi) + dLMb(\varphi)\cdot dLMc(\varphi) + dLMc(\varphi)\cdot dLMa(\varphi)} \cdot$$
$$\begin{bmatrix} dLMb(\varphi) + dLMc(\varphi); & dLMb(\varphi) \\ -dLMc(\varphi); & dLMa(\varphi) \end{bmatrix} \cdot \left(\begin{bmatrix} Va - Vb \\ Vb - Vc \end{bmatrix} - R \cdot \begin{bmatrix} Iaist - Ibist \\ Iaist + 2\ Ibist \end{bmatrix} -$$
$$\begin{bmatrix} ea - eb \\ eb - ec \end{bmatrix}\right)$$

where

$$dLM_a(\varphi) = La(\varphi) + Mbc(\varphi) - Mab(\varphi) - Mac(\varphi)$$

$$-dLM_b(\varphi) = -Lb(\varphi) - Mac(\varphi) + Mbc(\varphi) + Mab(\varphi)$$

$$dLM_c(\varphi) = Lc(\varphi) + Mab(\varphi) - Mac(\varphi) - Mbc(\varphi)$$

where ea, eb, ec correspond to the voltages induced in the phase winding sections, Va, Vb, Vc correspond to the terminal potentials, $I_{aist}$, $I_{bist}$, $I_{cist}$ correspond to the actual phase currents, La, Lb, Lc correspond to the phase inductances, Mab, Mac, Mbc correspond to the coupling inductances between two of the phase winding sections in each case, φ corresponds to the position of the rotor and R corresponds to the electrical phase resistance.

8.  Motor system (1) having an electric machine (2), an inverter (3) and the device according to Claim 7.

9.  Computer program configured to perform all of the steps of a method according to one of Claims 1 to 6.

10. Electronic storage medium on which a computer program according to Claim 9 is stored.


**Revendications**

1.  Procédé pour le fonctionnement régulé d'une machine électrique (2) polyphasée comprenant plusieurs branches de phase (23) connectées selon un circuit en étoile, comprenant les étapes suivantes :

    - fourniture d'un écart de régulation d'une régulation, la régulation comprenant une régulation de la vitesse de rotation, une régulation du couple ou une régulation du flux,
    - régulation du fonctionnement de la machine électrique (2) en fonction de courants de phase réels déterminés mathématiquement afin de fournir des indications de potentiel de borne (Sa, Sb, Sc) pour le pilotage d'un onduleur (3) qui applique en conséquence des potentiels de borne (Va, Vb, Vc) à la machine électrique, les courants de phase réels ($I_{aist}$, $I_{bist}$, $I_{cist}$) étant déterminés à l'aide d'un modèle de machine en fonction des potentiels de borne (Va, Vb, Vc) et de l'écart de régulation,
**caractérisé en ce que** le modèle de machine dépend d'une matrice d'inductance qui spécifie les caractéristiques magnétiques de la machine électrique (2) de telle sorte que celles-ci permettent de représenter sur les courants de phase réels (I$_{aist}$, I$_{bist}$, I$_{cist}$) des différences de tension entre les potentiels de borne (Va, Vb, Vc),
la matrice d'inductance possédant des termes issus d'inductances qui sont formées à partir des inductances de branche et des inductances de couplage, lesquelles sont respectivement dépendantes de la position du rotor, et les inductances étant définies par des coefficients d'harmoniques d'une rotation de l'angle de position électrique,
le calcul des courants de phase réels étant effectué :

$$\frac{d}{dt}\left(\begin{bmatrix} Iaist \\ Ibist \end{bmatrix}\right)$$

$$= \frac{1}{dLMa(\varphi) \cdot dLMb(\varphi) + dLMb(\varphi) \cdot dLMc(\varphi) + dLMc(\varphi) \cdot dLMa(\varphi)}$$
$$\cdot \begin{bmatrix} dLMb(\varphi) + dLMc(\varphi); & dLMb(\varphi) \\ -dLMc(\varphi); & dLMa(\varphi) \end{bmatrix}$$
$$\cdot \left(\begin{bmatrix} Va - Vb \\ Vb - Vc \end{bmatrix} - R \cdot \begin{bmatrix} Iaist - Ibist \\ Iaist + 2Ibist \end{bmatrix} - \begin{bmatrix} ea - eb \\ eb - ec \end{bmatrix}\right)$$

où

$$dLMa(\varphi) = La(\varphi) + Mbc(\varphi) - Mab(\varphi) - Mac(\varphi)$$

$$-dLMb(\varphi) = -Lb(\varphi) - Mac(\varphi) + Mbc(\varphi) + Mab(\varphi)$$

$$dLMc(\varphi) = Lc(\varphi) + Mab(\varphi) - Mac(\varphi) - Mbc(\varphi)$$

où
ea, eb, ec désignent les tensions induites dans les branches de phase, Va, Vb, Vc les potentiels de borne, I$_{aist}$, I$_{bist}$, I$_{cist}$ les courants de phase réels, La, Lb, Lc les inductances de branche, Mab, Mac, Mbc les inductances de couplage entre respectivement deux des branches de phase, $\varphi$ la position du rotor et R la résistance électrique de phase.

2. Procédé selon la revendication 1, les tensions de phase de consigne étant prédéfinies sous la forme de signaux modulés en largeur d'impulsion destinés au pilotage de l'onduleur (3), les potentiels de borne (Va, Vb, Vc) étant mesurées afin de déterminer les courants de phase réels (I$_{aist}$, I$_{bist}$, I$_{cist}$) à l'aide du modèle de machine.

3. Procédé selon l'une des revendications 1 à 2, les courants de phase réels I$_{aist}$, I$_{bist}$, I$_{cist}$) étant utilisés pour déterminer un couple de moteur réel (M$_{ist}$) et/ou des flux de moteur réels.

4. Procédé selon la revendication 3, le couple de moteur réel (M$_{ist}$) et/ou les flux de moteur réels étant utilisés pour une régulation du couple ou une régulation des flux.

5. Procédé selon la revendication 1, les inductances prenant en considération la totalité ou au moins les trois premiers, notamment les cinq premiers harmoniques des inductances de branche et des inductances de couplage entre les branches de phase (23).

6. Procédé selon l'une des revendications 1 à 5, dans lequel pour la régulation sont déterminés à l'aide du modèle de machine avec une matrice d'inductance inversée des courants de phase réels (I$_{aist}$, I$_{bist}$, I$_{cist}$) qui sont spécifiés dans un problème d'optimisation destiné à déterminer les indications de potentiel de borne (Sa, Sb, Sc).

7. Dispositif pour le fonctionnement régulé d'une machine électrique (2) polyphasée comprenant plusieurs branches de phase (23) connectées selon un circuit en étoile, le dispositif étant configuré pour :

- déterminer un écart de régulation d'une régulation, la régulation comprenant une régulation de la vitesse de rotation, une régulation du couple ou une régulation du flux,
- réguler le fonctionnement de la machine électrique (2) en fonction de courants de phase réels déterminés mathématiquement afin de fournir des indications de potentiel de borne (Sa, Sb, Sc) pour le pilotage d'un onduleur (3) qui applique en conséquence des potentiels de borne (Va, Vb, Vc) à la machine électrique, **caractérisé en ce que** les courants de phase réels ($I_{aist}$, $I_{bist}$, $I_{cist}$) sont déterminés à l'aide d'un modèle de machine en fonction des potentiels de borne (Va, Vb, Vc) et de l'écart de régulation, le modèle de machine dépendant d'une matrice d'inductance qui spécifie les caractéristiques magnétiques de la machine électrique (2) de telle sorte que celles-ci permettent de représenter sur les courants de phase réels ($I_{aist}$, $I_{bist}$, $I_{cist}$) des différences de tension entre les potentiels de borne (Va, Vb, Vc), la matrice d'inductance possédant des termes issus d'inductances qui sont formées à partir des inductances de branche et des inductances de couplage, lesquelles sont respectivement dépendantes de la position du rotor, et les inductances étant définies par des coefficients d'harmoniques d'une rotation de l'angle de position électrique, le calcul des courants de phase réels étant effectué :

$$
\frac{d}{dt}\left(\begin{bmatrix} Iaist \\ Ibist \end{bmatrix}\right)
$$

$$
= \frac{1}{dLMa(\varphi) \cdot dLMb(\varphi) + dLMb(\varphi) \cdot dLMc(\varphi) + dLMc(\varphi) \cdot dLMa(\varphi)}
$$

$$
\cdot \begin{bmatrix} dLMb(\varphi) + dLMc(\varphi); & dLMb(\varphi) \\ -dLMc(\varphi); & dLMa(\varphi) \end{bmatrix}
$$

$$
\cdot \left(\begin{bmatrix} Va - Vb \\ Vb - Vc \end{bmatrix} - R \cdot \begin{bmatrix} Iaist - Ibist \\ Iaist + 2Ibist \end{bmatrix} - \begin{bmatrix} ea - eb \\ eb - ec \end{bmatrix}\right)
$$

où

$$
dLMa(\varphi) = La(\varphi) + Mbc(\varphi) - Mab(\varphi) - Mac(\varphi)
$$

$$
-dLMb(\varphi) = -Lb(\varphi) - Mac(\varphi) + Mbc(\varphi) + Mab(\varphi)
$$

$$
dLMc(\varphi) = Lc(\varphi) + Mab(\varphi) - Mac(\varphi) - Mbc(\varphi)
$$

où

ea, eb, ec désignent les tensions induites dans les branches de phase, Va, Vb, Vc les potentiels de borne, $I_{aist}$, $I_{bist}$, $I_{cist}$ les courants de phase réels, La, Lb, Lc les inductances de branche, Mab, Mac, Mbc les inductances de couplage entre respectivement deux des branches de phase, $\varphi$ la position du rotor et R la résistance électrique de phase.

8. Système de moteur (1) comprenant une machine électrique (2), un onduleur (3) et le dispositif selon la revendication 7.

9. Programme informatique, lequel est conçu pour exécuter toutes les étapes d'un procédé selon l'une des revendications 1 à 6.

10. Support d'enregistrement électronique, sur lequel est enregistré un programme informatique selon la revendication 9.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055042 A1

**In der Beschreibung aufgeführte Nicht-Patentliteratur**

- **QINGFANG TENGI et al.** Current Sensorless Model Predictive Torque Control Based on Adaptive Backstepping Observer for PMSM Drives. Department of Automation and Electrical Engineering, Lanzhou Jiaotong University